# EUROPÄISCHE PATENTANMELDUNG

(11) **EP 4 826 197 A1**
(43) Veröffentlichungstag der Anmeldung: **21.10.2026**
(21) Anmeldenummer: 26169043.2
(22) Anmeldetag: 30.03.2026
(51) Int. Cl.: E05B 71/00, B62H 5/00, B62J 11/00

(54) **FLEXIBLER SCHLOSSBÜGEL UND SCHLIESSSYSTEM**

(30) Priorität: 11.04.2025 DE 102025114340
(71) Anmelder: ABUS August Bremicker Söhne KG, 58300 Wetter-Volmarstein (DE)
(72) Erfinder:
(74) Vertreter: Manitz Finsterwald Patent- und Rechtsanwaltspartnerschaft mbB

(57) **Zusammenfassung**

Ein flexibler Schlossbügel zum Sichern eines Zweirads weist mehrere miteinander verbundene und relativ zueinander schwenkbare Gelenkstäbe auf, die einen sich von einem ersten Ende zu einem zweiten Ende erstreckenden Gelenkstabbügel bilden. An dem ersten Ende des Gelenkstabbügels ist ein Ösenabschnitt angeordnet und an dem zweiten Ende des Gelenkstabbügels ist ein Verriegelungsabschnitt angeordnet, wobei der Ösenabschnitt eine Durchstecköffnung bildet, durch welche der Verriegelungsabschnitt in einer Gebrauchskonfiguration des Gelenkstabbügels, in welcher die Gelenkstäbe relativ zueinander verschwenkt sind, zum Bilden einer geschlossenen Schlaufe hindurchsteckbar ist. Zudem ist der Gelenkstabbügel in eine Zollstockkonfiguration zusammenfaltbar, in welcher die Gelenkstäbe parallel zueinander ausgerichtet sind.

## Beschreibung

Die Erfindung betrifft einen flexiblen Schlossbügel zum Sichern eines Zweirads, welcher einen Ösenabschnitt mit einer Durchstecköffnung sowie einen Verriegelungsabschnitt aufweist, welcher zum Bilden einer geschlossenen Schlaufe durch die Durchstecköffnung hindurchsteckbar ist.

Aus dem Stand der Technik sind derartige flexible Schlossbügel beispielsweise als Ketten- oder Seilbügel bekannt, an deren einem Ende durch ein Kettenglied oder eine Öse eine Durchstecköffnung gebildet ist, während an dem entgegengesetztem Ende beispielsweise ein Kloben als ein Verriegelungsabschnitt angeordnet sein kann. Der Kloben kann durch die Durchstecköffnung hindurchgeführt werden, um ausgehend von der Durchstecköffnung eine geschlossene Schlaufe bilden und einen Gegenstand mit der Schlaufe umschließen zu können. Der Kloben kann daraufhin beispielsweise an einem zugeordneten Schloss verriegelt werden, um die Schlaufe gegen ein unbefugtes Öffnen oder Aufziehen zu sichern.

Im Hinblick auf das Sichern eines Zweirads kann ein solcher Schlossbügel daher etwa um einen ortsfesten Gegenstand, beispielsweise einen Fahrradständer, geführt werden, um den ortsfesten Gegenstand in einem Innenraum der geschlossenen Schlaufe anzuordnen. Daraufhin kann der Verriegelungsabschnitt etwa an einem fest an dem zu sichernden Zweirad angebrachten Schloss, beispielsweise einem Rahmenschloss mit zusätzlicher Klobeneinführöffnung, verriegelt und das Zweirad dadurch gegen ein Entfernen von dem ortsfesten Gegenstand gesichert werden. Ebenso kann beispielsweise vorgesehen sein, die Schlaufe derart zu bilden, dass ein Rahmenabschnitt und ein Abschnitt eines Laufrads des zu sichernden Zweirads in dem Innenraum der Schlaufe eingeschlossen werden, wobei sodann durch Verriegeln des Verriegelungsabschnitts an einem zugeordneten Schloss, dessen Schlosskörper nicht durch die Durchstecköffnung hindurchführbar ist, das Zweirad gegen ein unbefugtes Wegfahren gesichert werden kann.

Flexible Schlossbügel bieten somit vielseitige Möglichkeiten zum Sichern von Zweirädern, indem die Schlaufe stets bedarfsgerecht gebildet und der Schlossbügel um eine Vielzahl verschiedenartiger Gegenstände gewunden werden kann, beispielsweise Fahrradständer, Laternenpfosten, Baumstämme oder Zaunelemente. Allerdings ergibt sich grundsätzlich eine Problematik beim Transport derartiger Schlossbügel, da die Schlossbügel aufgrund ihrer Flexibilität nicht in eine stabile und geordnet zu transportierende Konfiguration überführbar sind. Daher müssen die Schlossbügel zum Transport und insbesondere während einer Fahrt mit dem Zweirad beispielsweise um den Körper gewunden, um einen Rahmenabschnitt des Zweirads gewunden oder eigens in einem Rucksack mitgeführt werden, so dass die Schlossbügel lediglich unkomfortabel zu transportieren sind, wobei ein Winden um einen Rahmenabschnitt gegebenenfalls auch zu unerwünschten Verkratzungen an dem Rahmenabschnitt führen kann.

Daher ist es eine Aufgabe der Erfindung, einen flexiblen Schlossbügel zum Sichern eines Zweirads zu schaffen, der auf einfache und komfortable Weise verstaut und während einer Fahrt mit dem Zweirad mitgeführt werden kann.

Gelöst wird diese Aufgabe durch einen flexiblen Schlossbügel mit den Merkmalen des Anspruchs 1.

Der flexible Schlossbügel weist demgemäß mehrere miteinander verbundene und relativ zueinander um jeweilige Gelenkachsen schwenkbare Gelenkstäbe auf, die einen sich von einem ersten Ende zu einem zweiten Ende erstreckenden Gelenkstabbügel bilden. An dem ersten Ende des Gelenkstabbügels ist ein Ösenabschnitt angeordnet und an dem zweiten Ende des Gelenkstabbügels ist ein Verriegelungsabschnitt angeordnet, wobei der Ösenabschnitt eine Durchstecköffnung bildet, durch welche der Verriegelungsabschnitt in einer Gebrauchskonfiguration des Gelenkstabbügels, in welcher die Gelenkstäbe relativ zueinander verschwenkt sind, zum Bilden einer geschlossenen Schlaufe hindurchsteckbar ist. Ferner ist der Gelenkstabbügel in eine Zollstockkonfiguration zusammenfaltbar, in welcher die Gelenkstäbe parallel zueinander ausgerichtet sind.

Grundsätzlich sind Gelenkstabbügel als Schlossbügel von als Gelenkschlösser oder Faltschlösser bezeichneten Schlössern bekannt, wobei derartige Schlösser einen Schlosskörper mit einer Verriegelungseinrichtung aufweisen, um den Gelenkstabbügel wahlweise an dem Schlosskörper verriegeln oder zumindest ein Ende des Gelenkstabbügels für ein Lösen von dem Schlosskörper freigeben zu können. Hierbei kann beispielsweise vorgesehen sein, dass ein Ende des Gelenkstabbügels dauerhaft an den Schlosskörper befestigt ist, während das andere Ende wahlweise verriegelt oder freigegeben werden kann, oder beide Enden des Gelenkstabbügels können wahlweise an dem Schlosskörper verriegelbar oder von dem Schlosskörper lösbar sein. Für das wahlweise verriegelbare Ende oder die wahlweise verriegelbaren Enden kann der Schlosskörper eine (jeweilige) Einführöffnung aufweisen, durch welche das betreffende Ende in einen Innenraum des Schlosskörpers einführbar sein kann, um darin verriegelt werden zu können.

Während bislang jedoch ausschließlich in sich geschlossene Gelenk- oder Faltschlösser genutzt wurden, beruht die vorliegende Erfindung auf der Erkenntnis, das Bügelkonzept eines Gelenk- oder Faltschlosses auf neuartige Weise auch bei einem flexiblen Schlossbügel in der eingangs erläuterten Art einsetzen zu können.

Indem der Schlossbügel der vorliegenden Offenbarung einen Gelenkstabbügel mit mehreren schwenkbar miteinander verbundenen Gelenkstäben aufweist, ist der Schlossbügel flexibel gestaltet. Als flexibler Schlossbügel unterscheidet sich der Schlossbügel somit insbesondere von starren Schlossbügeln, welche keine relativ zueinander bewegbaren Elemente - hier die mehreren Gelenkstäbe - aufweisen, beispielsweise von starren U-Bügeln sogenannter U-Bügel-Hangschlösser. Durch entsprechendes Verschwenken der Gelenkstäbe relativ zueinander und daher aufgrund der flexiblen Gestaltung des Schlossbügels kann der Schlossbügel an verschiedene Situationen angepasst und in der Form verändert werden, um verschiedenartige Schlaufen formen und einen Gegenstand wie etwa einen Fahrradständer bedarfsgerecht umschließen zu können. Durch die Anordnung des Ösenabschnitts mit der Durchstecköffnung und dem Verriegelungsabschnitt an den Enden kann der hierin offenbarte Schlossbügel, ähnlich bekannten Ketten- oder Seilbügeln, auf komfortable Art und Weise zum Sichern eines Zweirads durch Bilden einer geschlossenen Schlaufe genutzt werden, indem der Verriegelungsabschnitt nach einem Durchführen durch die Durchstecköffnung an einem zugeordneten Schloss verriegelt wird.

Insbesondere kann der Schlossbügel daher dazu ausgebildet sein, in der Gebrauchskonfiguration durch Hindurchstecken des Verriegelungsabschnitts durch die Durchstecköffnung eine geschlossene Schlaufe zu bilden, insbesondere ausgehend von der Durchstecköffnung entlang des Gelenkstabbügels bis zu einem Eintrittspunkt des Gelenkstabbügels in die Durchstecköffnung.

Zusätzlich zu dieser flexiblen Gestaltung des Bügels zum Sichern eines Zweirads in der Gebrauchskonfiguration kann der Gelenkstabbügel jedoch auch in die erwähnte Zollstockkonfiguration überführt werden, in welcher sämtliche Gelenkstäbe parallel zueinander ausgerichtet sind. In dieser Konfiguration können die Gelenkstäbe somit einen kompakten und insbesondere im Wesentlichen quaderförmigen Körper bilden, welcher kompakt und stabil für einen Transport verstaut werden kann. Insbesondere kann das Überführen in die Zollstockkonfiguration, anders als bei bekannten Schlossbügeln, grundsätzlich sogar ein Einsetzen des Schlossbügels in einen an einem Zweirad befestigbaren Halter ermöglichen, so dass der Schlossbügel auf komfortable Art und Weise und ohne die bei herkömmlichen Schlossbügeln auftretenden Einschränkungen mitgeführt und transportiert werden kann. Dies wird auch nachstehend noch weitergehend erläutert.

Indem der Verriegelungsabschnitt durch die Durchstecköffnung hindurchsteckbar ist, kann der Verriegelungsabschnitt bei gebildeter Schlaufe insbesondere die Durchstecköffnung durchqueren und an einer einer Eintrittsseite entgegengesetzten Austrittsseite aus der Durchstecköffnung herausstehen. Auch hierdurch unterscheidet sich der flexible Schlossbügel ersichtlich von Gelenk- oder Faltschlössern, bei welchen ein endseitiger Gelenkstab des Gelenkstabbügels in einen Schlosskörper oder ein Schlossgehäuse einführbar und darin verriegelbar sein kann, ohne jedoch wieder aus dem Schlosskörper herauszutreten.

Zudem kann ein Unterschied zu Gelenk- oder Faltschlössern darin liegen, dass der Schlossbügel der hierin offenbarten Art keinen Verriegelungsmechanismus zum Verriegeln des Verriegelungsabschnitts gegen ein Lösen aus der Durchstecköffnung aufweisen muss (insbesondere aufweist), sondern hierzu eine gesonderte Verriegelungseinrichtung, insbesondere ein gesondertes Schloss, vorgesehen sein kann.

Insbesondere können sich aneinander anschließende Gelenkstäbe ferner an jeweiligen Anschlussstellen um jeweilige Gelenkachsen relativ zueinander verschwenkbar sein, gleichsam ähnlich einem Zollstock. Hierzu können die Gelenkstäbe insbesondere durch jeweilige Nieten miteinander verbunden sein, um einerseits eine sichere Fixierung der Gelenkstäbe aneinander und andererseits eine relative Verschwenkbarkeit der Gelenkstäbe zueinander erreichen zu können. Ferner können sich die Gelenkstäbe entlang einer jeweiligen Längsachse erstrecken, wobei die Längsachsen der Gelenkstäbe in der Zollstockkonfiguration parallel zueinander ausgerichtet sein können.

In der Gebrauchskonfiguration können die Gelenkstäbe hingegen relativ zueinander verschwenkt sein, so dass zumindest zwei der mehreren Gelenkstäbe in der Gebrauchskonfiguration nicht parallel zueinander ausgerichtet sind. Insbesondere kann die Gebrauchskonfiguration jedoch verschiedene Ausrichtungen der Gelenkstäbe relativ zueinander umfassen, um den Gelenkstabbügel auf flexible Art und Weise in sich unterscheidende Formen bringen und hierdurch flexible Möglichkeiten zum bedarfsgerechten Bilden der geschlossenen Schlaufe bereitstellen zu können. Zudem können die Gelenkstäbe, etwa bei einer Befestigung durch Niete aneinander, grundsätzlich auch zumindest geringfügig parallel zu den Gelenkachsen zueinander auslenkbar sein, so dass der Schlossbügel auch in dieser Richtung zumindest eine geringfügige Flexibilität aufweisen kann.

Ferner können die Gelenkstäbe insbesondere flach und/oder als flache Stäbe ausgebildet sein.

Beispielsweise können die Gelenkstäbe dazu eine jeweilige Längsachse aufweisen und in einem Querschnitt in einer senkrecht zu der betreffenden Längsachse ausgerichteten Schnittebene im Wesentlichen rechteckig (mit abgerundeten oder einen rechten Winkel bildenden Ecken) ausgebildet sein. Die Gelenkstäbe können dazu in dem Querschnitt insbesondere durch zwei einander gegenüberliegende relativ längere Seiten und zwei einander gegenüberliegende relativ kürzere Seiten begrenzt sein und somit eine flache Form ausbilden. Die relativ kürzeren Seiten können zudem insbesondere senkrecht zu den relativ längeren Seiten ausgerichtet sein. Darüber hinaus können die relativ längeren Seiten parallel zueinander ausgerichtet sein und/oder die relativ kürzeren Seiten können parallel zueinander ausgerichtet sein, wobei jedoch auch vorgesehen sein kann, dass die relativ längeren Seiten und/oder die relativ kürzeren Seiten gekrümmt ausgebildet sind. Insbesondere können die relativ kürzeren Seiten bei einigen Ausführungsformen als abgerundete Abschnitte zwei parallel zueinander ausgerichtete und zueinander beabstandete relativ längere Seiten einer Querschnittsform eines flachen Gelenkstabbügels miteinander verbinden.

Weitere Ausführungsformen sind in den abhängigen Ansprüchen, der Beschreibung sowie anhand der Zeichnungen erläutert.

Bei einigen Ausführungsformen können die Gelenkachsen in der Zollstockkonfiguration in einer oberen Gelenkachse und einer unteren Gelenkachse zusammenfallen. Dies kann eine geordnete und kompakte Anordnung der Gelenkstäbe ermöglichen, wobei die Gelenkstäbe insbesondere in der Zollstockkonfiguration innerhalb einer gemeinsamen Aufbewahrungsebene angeordnet sein können, ohne dass einzelne Gelenkstäbe aus dieser Ebene herausgeschwenkt sind.

Die Gelenkstäbe können ferner mit zueinander identischer Länge ausgebildet sein. Auch dies kann eine kompakte und geordnete Anordnung in der Zollstocckonfiguration begünstigen.

Die Gelenkstäbe können sich bei einigen Ausführungsformen entlang einer jeweiligen Längsachse erstrecken, wobei die Längsachsen der Gelenkstäbe in der Zollstockkonfiguration parallel zueinander ausgerichtet sein können. Zudem kann der Verriegelungsabschnitt in der Zollstockkonfiguration bei einigen Ausführungsformen senkrecht zu den Längsachsen der Gelenkstäbe und/oder zu den Gelenkstäben ausrichtbar und in einem Zwischenraum zwischen den Gelenkstäben und der Durchstecköffnung positionierbar sein.

Insbesondere kann der Verriegelungsabschnitt somit über das zweite Ende des Gelenkstabbügels hinausstehen, bei in der Zollstockkonfiguration angeordnetem Gelenkstabbügel jedoch in einem Zwischenraum zwischen den Gelenkstäben und der Durchstecköffnung anordenbar sein. Hierbei kann der Verriegelungsabschnitt senkrecht zu den Längsachsen der Gelenkstäbe ausgerichtet in den Zwischenraum einbringbar sein und sich somit gewissermaßen oberhalb der Gelenkstäbe (bei oben oder oberhalb der Gelenkstäbe angeordneter Durstecköffnung) erstrecken. Dies ermöglicht es, die ohnehin zur Anordnung der Gelenkstäbe quer zu deren Längsachsen erforderliche Ausdehnung des Schlossbügels zu nutzen, um den Verriegelungsabschnitt kompakt in dem Zwischenraum zu verstauen und den Schlossbügel insgesamt kompakt und sich zumindest im Wesentlichen in der durch die Gelenkstäbe vorgegebenen Ebene erstreckend anordnen zu können.

Der Verriegelungsabschnitt kann ferner insbesondere um eine senkrecht zu den Gelenkachsen des Gelenkstabbügels und einer Erstreckungsebene des Gelenkstabbügels in der Zollstockkonfiguration ausgerichtete Verriegelungsabschnitt-Kippachse relativ zu dem das zweite Ende bildenden Gelenkstab schwenkbar sein, um beispielsweise vor oder während des Überführens des Gelenkstabbügels in die Zollstockkonfiguration in die Ausrichtung senkrecht zu den Gelenkstäben gebracht und in den Zwischenraum eingeführt werden zu können.

Bei einigen Ausführungsformen kann die Durchstecköffnung durch einen den Gelenkstab in der Zollstockkonfiguration abgewandten Oberabschnitt und einen dem Gelenkstab in der Zollstockkonfiguration zugewandten Unterabschnitt begrenzt sein, wobei zwischen dem Unterabschnitt und dem Schlossbügel in der Zollstocckonfiguration ein Zwischenraum gebildet sein kann, in welchem der Verriegelungsabschnitt in der Zollstockkonfiguration des Schlossbügels anordenbar ist.

Bei einigen Ausführungsformen kann der Ösenabschnitt eine Klemmstruktur aufweisen, in welche der Verriegelungsabschnitt in der Zollstockkonfiguration einklemmbar ist.

Beispielsweise kann der Ösenabschnitt ein Gehäuse, insbesondere ein Kunststoffgehäuse, aufweisen, an welchem eine insbesondere elastisch verformbare Klemmstruktur ausgebildet sein kann, um den Verriegelungsabschnitt bei in die Zollstockkonfiguration überführten Gelenkstabbügel einklemmen zu können. Dies kann insbesondere eine sichere Aufbewahrung mit eingeklemmtem und daher sicher gehaltenem Verriegelungsabschnitt ermöglichen, um beispielsweise Bewegungen des Verriegelungsabschnitts und etwa ein dadurch bedingtes Klappern während einer Fahrt mit dem zu sichernden Zweirad zu vermeiden.

Insbesondere kann hierzu an einem die Durchstecköffnung in Richtung des Gelenkstabbügels begrenzenden Unterabschnitt des Ösenabschnitts eine elastisch auslenkbare Klemmerhebung ausgebildet sein, wobei der Verriegelungsabschnitt im Zuge des Überführens des Gelenkstabbügels in die Zollstockkonfiguration an der Klemmerhebung vorbei und durch die Klemmerhebung an dem Ösenabschnitt einklemmbar sein kann, insbesondere in einem Zwischenraum zwischen dem Gelenkstabbügel und dem Unterabschnitt des Ösenabschnitts.

Bei einigen Ausführungsformen können sämtliche Gelenkachsen parallel zueinander ausgerichtet sein. Insbesondere können die Gelenkachsen sowohl in der Gebrauchskonfiguration als auch in der Zollstockkonfiguration parallel zueinander ausgerichtet sein, wobei bei einigen Ausführungsformen zudem vorgesehen sein kann, dass in der Zollstockkonfiguration die Gelenkachsen in eine obere Gelenkachse und eine untere Gelenkachse zusammenfallen. Ferner kann jedoch insbesondere in der Gebrauchskonfiguration vorgesehen sein, dass die Gelenkstäbe gegeneinander auch geringfügig parallel zu den Gelenkachsen relativ zueinander auslenkbar sind, um hierdurch einen gewissen zusätzlichen Freiheitsgrad beim Bilden der Schlaufe zu schaffen und Toleranzen zu ermöglichen.

Die Gelenkstäbe können bei einigen Ausführungsformen eine Ummantelung aufweisen, wobei die Ummantelung insbesondere aus Kunststoff oder Gummi gefertigt und/oder elastisch sein kann.

Insbesondere kann durch eine solche Ummantelung ein Klappern durch ein Anschlagen der Gelenkstäbe aneinander während einer Fahrt mit dem Zweirad vermieden werden. Darüber hinaus können etwaige Beschädigungen oder ein Verkratzen eines Rahmenabschnitts des Zweirads bei einem Gebrauch des Schlossbügels vermieden und im Vergleich zu einer aus Metall gebildeten Außenseite der Gelenkstäbe eine insgesamt komfortablere Handhabung erreicht werden.

Jedoch können die Gelenkstäbe allgemein einen insbesondere aus Metall und/oder Stahl, insbesondere gehärtetem Stahl, ausgebildeten Stababschnitt aufweisen, welcher - bei entsprechenden Ausführungsformen - von der erwähnten Ummantelung umgeben sein kann.

Der Ösenabschnitt kann bei einigen Ausführungsformen ein Kunststoffgehäuse aufweisen. Insbesondere kann der Ösenabschnitt zumindest abschnittsweise von einem Kunststoffgehäuse umgeben sein. Hierbei kann etwa zumindest ein von dem ersten Ende des Gelenkstabbügels beabstandeter Abschnitt des Ösenabschnitts durch das Kunststoffgehäuse umgeben sein, um hierdurch wiederum eine Geräuschbildung während einer Fahrt mit dem Zweirad bei verstautem Schlossbügel und/oder Beschädigungen des Zweirads durch ein Anschlagen des Schlossbügels und insbesondere dessen Ösenabschnitts an einem Rahmen des Zweirads zu verhindern.

Zudem kann der Ösenabschnitt bei einigen Ausführungsformen einen metallischen Sicherungsabschnitt aufweisen, welcher an dem ersten Ende des Gelenkstabbügels angebracht ist und die Durchstecköffnung bildet. Hierdurch kann die erforderliche Sicherheit des Schlossbügels gegenüber gewaltsamen Aufbruchsversuchen erreicht werden, wobei der Sicherungsabschnitt jedoch gegebenenfalls von dem erwähnten Kunststoffgehäuse umgeben sein kann. Der Sicherungsabschnitt kann beispielsweise durch ein gebogenes Blech und/oder flaches Metallelement gebildet sein, um die Durchstecköffnung auszubilden.

Der Ösenabschnitt kann bei einigen Ausführungsformen einen Griff zum Halten des Schlossbügels bilden. Insbesondere kann der Ösenabschnitt daher auch händisch durchgreifbar sein, um den Schlossbügel etwa für einen Transport in einen Halter einsetzen oder vor einem Gebrauch aus dem Halter lösen zu können.

Der Ösenabschnitt kann bei einigen Ausführungsformen schwenkbar an dem ersten Ende angeordnet sein. Insbesondere kann der Ösenabschnitt bei einigen Ausführungsformen um eine parallel zu den Gelenkachsen ausgerichtete Ösenabschnitt-Gelenkachse an dem ersten Ende angeordnet sein.

Beispielsweise kann vorgesehen sein, dass der Ösenabschnitt durch einen Niet an dem ersten Ende des Gelenkstabbügels befestigt ist, so dass der Ösenabschnitt um den Niet schwenkbar an dem ersten Ende gehalten sein kann. Die Gelenkstäbe können bei solchen Ausführungsformen beispielsweise durch parallel zu dem den Ösenabschnitt befestigenden Niet ausgerichtete Niete aneinander befestigt sein, so dass der um den betreffenden Niet schwenkbare Ösenabschnitt um eine parallel zu den durch die weiteren Niete gebildeten Gelenkachsen ausgerichtete Ösenabschnitt-Gelenkachse schwenkbar sein kann. Eine schwenkbare Anordnung des Ösenabschnitts kann insbesondere die Flexibilität bei der Schlaufenbildung und damit den Komfort bei der Handhabung des Schlossbügels noch weiter erhöhen.

Der Ösenabschnitt kann bei einigen Ausführungsformen einen sich von dem ersten Ende weg erstreckenden Anschlussabschnitt und einen Durchsteckabschnitt aufweisen, welcher die Durchstecköffnung bildet.

Insbesondere kann durch den Anschlussabschnitt ein Abstand zwischen dem ersten Ende des Gelenkstabbügels und der Durchstecköffnung geschaffen werden, um etwa den vorstehend bereits erwähnten Zwischenraum zum Anordnen des Verriegelungsabschnitts schaffen zu können. Insbesondere kann sich der Anschlussabschnitt in der Zollstockkonfiguration entlang einer Längsachse des das erste Ende des Gelenkstabbügels bildenden Gelenkstabs erstrecken, um die Durchstecköffnung beabstandet von dem Gelenkstabbügel ausbilden zu können.

Darüber hinaus kann der durch einen solchen Anschlussabschnitt gebildete Freiraum zwischen dem Gelenkstabbügel und dem Durchsteckabschnitt ein Verschwenken des das erste Ende bildenden Gelenkstabs relativ zu dem Ösenabschnitt ermöglichen. Insbesondere kann der das erste Ende bildende Gelenkstab um etwa 180° relativ zu dem Ösenabschnitt schwenkbar sein, so dass, umgekehrt betrachtet, auch der Ösenabschnitt bei einigen Ausführungsformen um zumindest 180° relativ zu dem das erste Ende bildenden Gelenkstab des Gelenkstabbügels schwenkbar sein kann.

Bei einigen Ausführungsformen kann der Anschlussabschnitt einem benachbarten Gelenkstab entgegengesetzt an dem das erste Ende bildenden Gelenkstabbügel angeordnet sein. Mit anderen Worten kann der Anschlussabschnitt somit außenseitig an dem das erste Ende bildenden Gelenkstabbügel angeschlossen sein, so dass sich der Gelenkstabbügel gewissermaßen zwischen dem Anschlussabschnitt des Ösenabschnitts und dem an dem zweiten Ende angeordneten Verriegelungsabschnitt erstrecken kann.

Der Durchsteckabschnitt kann bei einigen Ausführungsformen in einen sich entlang des Verbindungsabschnitts erstreckenden Überlappungsabschnitt übergehen. Insbesondere kann somit in einem Bereich, in welchem sich der Überlappungsabschnitt erstreckt, der Ösenabschnitt zweilagig ausgebildet sein, indem der Verbindungsabschnitt und der Überlappungsabschnitt aneinander anliegen können. Beispielsweise kann ein derartiger Ösenabschnitt durch ein umgebogenes Blech realisierbar sein.

Der Verbindungsabschnitt und der Überlappungsabschnitt können bei einigen Ausführungsformen durch ein gemeinsames Befestigungselement, insbesondere einen Niet, an dem ersten Ende des Gelenkstabbügels befestigt sein.

Insbesondere kann durch eine solche zweilagige Anordnung eine vollständig geschlossene Durchstecköffnung gebildet werden, wobei der Überlappungsabschnitt und der Verbindungsabschnitt durch den Niet sicher miteinander verbunden sein können, um etwa ein Aufbiegen der Durchstecköffnung oder des Ösenabschnitts im Zuge eines Aufbruchsversuchs zu verhindern. Zudem kann der Niet auf geschickte Art und Weise unmittelbar auch zur Befestigung des Ösenabschnitts an dem ersten Ende des Gelenkstabbügels dienen, was zudem insbesondere eine schwenkbare Anordnung des Ösenabschnitts an dem ersten Ende des Gelenkstabbügels ermöglichen kann.

Der Ösenabschnitt kann bei einigen Ausführungsformen P-förmig ausgebildet sein. Insbesondere kann durch eine solche P-Form ermöglicht werden, den Ösenabschnitt ausgehend von dem ersten Endabschnitt zunächst von dem in der Zollstockkonfiguration befindlichen Gelenkstabbügel wegzuführen, um die Durchstecköffnung beabstandet zu dem Gelenkstabbügel anordnen zu können und einen Zwischenraum zwischen dem Gelenkstabbügel und der Durchstecköffnung zu schaffen, in welchem insbesondere der Verriegelungsabschnitt (bei in der Zollstockkonfiguration befindlichem Gelenkstabbügel) anordenbar sein kann.

Der Verriegelungsabschnitt kann bei einigen Ausführungsformen um eine parallel zu den Gelenkachsen ausgerichtete Verriegelungsabschnitt-Gelenkachse schwenkbar sein. Alternativ oder zusätzlich kann der Verriegelungsabschnitt bei einigen Ausführungsformen um eine senkrecht zu den Gelenkachsen ausgerichtete Verriegelungsabschnitt-Kippachse schwenkbar sein.

Insbesondere kann somit vorgesehen sein, dass der Verriegelungsabschnitt sowohl um eine parallel zu den Gelenkachsen ausgerichtete Verriegelungsabschnitt-Gelenkachse als auch um eine senkrecht zu den Gelenkachsen ausgerichtete Verriegelungsabschnitt-Kippachse schwenkbar ist, wobei hierdurch eine möglichst freie Bewegbarkeit des Verriegelungsabschnitts geschaffen werden kann. Insbesondere kann der Verriegelungsabschnitt für die Gebrauchskonfiguration durch Schwenken um die Verriegelungsabschnitt-Kippachse entlang der Längsachse des das zweite Ende bildenden Gelenkstabs ausrichtbar sein, um entlang dieser Längsachse durch die Durchstecköffnung geführt werden zu können. Hingegen kann der Verriegelungsabschnitt durch Schwenken oder Kippen um die Verriegelungsabschnitt-Kippachse insbesondere senkrecht zu den Gelenkstäben ausrichtbar sein, wenn der Gelenkstabbügel in die Zollstockkonfiguration überführt ist oder wird, um in dem bereits erwähnten Zwischenraum zwischen dem Ösenabschnitt und dem Gelenkstabbügel angeordnet werden zu können.

Der Verriegelungsabschnitt kann bei einigen Ausführungsformen ein Verbindungselement und ein Verriegelungselement aufweisen, wobei das Verbindungselement um eine parallel zu den Gelenkachsen ausgerichtete Verbindungselement-Gelenkachse schwenkbar an dem ersten Ende des Gelenkstabbügels befestigt und das Verriegelungselement um eine senkrecht zu der Verbindungselement-Gelenkachse ausgerichtete Verriegelungselement-Kippachse schwenkbar an dem Verbindungselement befestigt sein kann.

Insbesondere kann das Verbindungselement bei solchen Ausführungsformen durch einen Niet an dem zweiten Ende des Gelenkstabbügels befestigt sein, welcher wiederum parallel zu den Nieten ausgerichtet sein kann, über welche aneinander angrenzende Gelenkstäbe des Gelenkstabbügels aneinander befestigt sind. Das Verbindungselement kann beispielsweise beabstandet zu dem zweiten Ende des Gelenkstabbügels einen Lagerungsabschnitt, beispielsweise mit zwei zueinander beabstandeten Lagerungsöffnungen, ausbilden, in welchen das Verriegelungselement um die Verriegelungselement-Kippachse schwenkbar an dem Verbindungselement gehalten sein kann.

Zudem kann das Verriegelungselement bei einigen Ausführungsformen einem Gelenkstabbügel entgegengesetzt angeordnet sein, welcher dem das zweite Ende des Gelenkstabbügels bildenden Gelenkstabbügel benachbart ist. Insbesondere kann der Gelenkstabbügel somit zwischen dem Verbindungselement des Verriegelungsabschnitt und dem erwähnten Anschlussabschnitt des Ösenabschnitts angeordnet sein. Darüber hinaus kann bei einigen Ausführungsformen auch vorgesehen sein, dass das Verbindungselement zumindest abschnittsweise zweilagig ausgebildet ist, wobei die beiden Lagen durch ein gemeinsames Befestigungselement, insbesondere den erwähnten Niet, mit dem zweiten Ende des Gelenkstabbügels verbunden sein können.

Der Verriegelungsabschnitt kann bei einigen Ausführungsformen einen an einem zugeordneten Schloss verriegelbaren Kloben, eine Öse oder einen Verriegelungsmechanismus aufweisen.

Insbesondere kann daher das vorstehend erwähnte Verriegelungselement als ein Kloben oder eine Öse ausgebildet sein. Ein Kloben kann beispielsweise in eine Einführöffnung eines zugeordneten Schlosses, insbesondere eines an einem Zweirad befestigten Rahmenschlosses, einführbar sein, um dort verriegelt zu werden und einen in einem Innenraum der von dem Schlossbügel gebildeten Schlaufe eingeschlossenen Gegenstand zu sichern und/oder ein durch den Schlossbügel zu sicherndes Zweirad sicher mit dem eingeschlossenen Gegenstand zu verbinden. Ferner kann eine Öse mit einem gegenüber dem Ösenabschnitt geringeren Durchmesser ausgebildet sein, um durch die Durchstecköffnung hindurchführbar und gleichsam beispielsweise an einem zugeordneten Schloss verriegelbar zu sein, wenn der Schlossbügel eine geschlossene Schlaufe bildet.

Allgemein kann ein Kloben (oder der erwähnte Kloben) beispielsweise stiftförmig ausgebildet sein und eine Verriegelungsvertiefung für einen Eingriff eines Riegelelements eines zugeordneten Schlosses aufweisen. Insbesondere kann eine solche Verriegelungsvertiefung als eine umlaufende Ringnut ausgebildet sein.

Ein stiftförmiger Kloben kann daher insbesondere entlang einer Einführrichtung, welche einer Erstreckungsrichtung des stiftförmigen Klobens entsprechen kann, in eine Einführöffnung eines zugeordneten Schlosses einführbar sein, um durch einen Eingriff eines Riegelelements in die Verriegelungsvertiefung verriegelt werden zu können. Bei einer Ausbildung der Verriegelungsvertiefung als umlaufende Ringnut kann die Verriegelung zudem unabhängig von einer Drehstellung des eingeführten Klobens in Bezug auf Drehungen des Klobens um dessen Längsachse erfolgen.

Zudem kann der Verriegelungsabschnitt jedoch etwa auch durch eine Verriegelungseinrichtung gebildet sein, wobei eine solche Verriegelungseinrichtung etwa an einem ortsfesten Kloben aufsteckbar und dazu ausgebildet sein kann, den ortsfesten Kloben zu verriegeln. Auch hierdurch kann die durch den Schlossbügel gebildete Schlaufe somit gegen ein Öffnen oder Aufziehen gesichert werden.

Die Erfindung betrifft ferner ein Schließsystem umfassend einen Schlossbügel gemäß der vorliegenden Offenbarung sowie einen Halter, in welchen der Schlossbügel bei in der Zollstockkonfiguration befindlichem Gelenkstabbügel einsetzbar ist.

Wie bereits erwähnt, kann die Ausbildung des Schlossbügels mit einem Gelenkstabbügel einen komfortablen Transport des Schlossbügels ermöglichen, indem der Schlossbügel in die stabile und geordnete Zollstockkonfiguration überführbar ist. Durch die Ausbildung des Schließsystems mit einem Halter für den Schlossbügel kann der Schlossbügel ferner zuverlässig und geordnet in den Halter eingesetzt und derart, etwa bei einer Fahrt mit dem Zweirad, transportiert werden.

Der Halter kann bei einigen Ausführungsformen an dem Zweirad befestigbar sein. Auch dies kann einen komfortablen Transport des Schlossbügels ermöglichen, indem unmittelbar an dem Zweirad in Form des Halters eine Struktur zum Transportieren des Schlossbügels vorgesehen sein kann, ohne dass etwa eine sonstige Tasche oder ein Rucksack zum Aufbewahren des Schlossbügels mitgeführt werden muss.

Um an dem Zweirad befestigt werden zu können, kann der Halter beispielsweise Befestigungsöffnungen aufweisen, durch welche Schrauben hindurchführbar sein können, um den Halter an an einem Rahmenabschnitt des Zweirads häufig ohnehin vorgesehenen Einschrauböffnungen (beispielsweise auch zum Anbringen von Flaschenhaltern) anschrauben zu können. Alternativ oder zusätzlich kann der Halter auch Bänder aufweisen, die etwa nach Art eines Spanngurts zur Befestigung an dem Zweirad genutzt werden können.

Die Durchstecköffnung kann bei einigen Ausführungsformen durch einen dem Gelenkstabbügel in der Zollstockkonfiguration abgewandten Oberabschnitt und einen dem Gelenkstabbügel in der Zollstockkonfiguration zugewandten Unterabschnitt begrenzt sein, wobei der Halter einen Klemmabschnitt aufweisen kann, welcher sich entlang einer dem Oberabschnitt zugewandten Oberseite des Unterabschnitts des eingesetzten Schlossbügels erstreckt und den Schlossbügel in dem Halter sichert.

Insbesondere kann der Klemmabschnitt den Unterabschnitt der Durchstecköffnung dazu an dessen Oberseite zumindest abschnittsweise übergreifen, um beispielsweise einen Druck auf die Oberseite auszuüben und den Schlossbügel hierdurch in Richtung des Gelenkstabbügels nach unten in den Halter einzudrücken. Ein solches Übergreifen ist - anders dies etwa bei einem Gelenk- oder Faltschloss der Fall wäre, ohne Einbußen im Komfort möglich, da etwa durch Angreifen an dem Oberabschnitt und Ausnutzen der entsprechenden Hebelwirkung ein Drehmoment oder ein Druck nach unten zum Lösen des Schlossbügels aus dem Halter erzeugt werden kann, so dass der Klemmabschnitt nicht etwa händisch von der Oberseite des Unterabschnitts entfernt werden muss, um ein Lösen des Schlossbügels aus dem Halter zu ermöglichen. Da ein solcher Angriffspunkt bei einem herkömmlichen Gelenk- oder Faltschloss fehlt, dessen Schlosskörper keine Durchstecköffnung ausbildet, kann ein derartig ausgebildeter Halter mit einem den Oberabschnitt übergreifenden Klemmabschnitt erst in Kombination mit dem hierin offenbarten Schlossbügel, jedoch nicht bei bekannten Gelenk- oder Faltschlössern, gewinnbringend eingesetzt werden.

Der Klemmabschnitt kann bei einigen Ausführungsformen eine Eingriffserhebung und der Unterabschnitt kann eine Eingriffsnut aufweisen, oder umgekehrt, wobei die Eingriffserhebung bei in den Halter eingesetztem Schlossbügel in die Eingriffsnut eingreifen kann.

Beispielsweise kann der Klemmabschnitt dazu hakenartig und mit einer Eingriffserhebung ausgebildet sein, um in eine an dem Unterabschnitt ausgebildete Eingriffsnut eingreifen und den Schlossbügel hierdurch gegen eine Bewegung aus dem Halter heraus sichern zu können. Insbesondere kann eine Eingriffsnut oder Eingriffserhebung hierbei an einem Gehäuse, insbesondere Kunststoffgehäuse, des Ösenabschnitts ausgebildet sein.

Zudem kann der Klemmabschnitt bei einigen Ausführungsformen elastisch verformbar sein.

Der Schlossbügel kann bei einigen Ausführungsformen in um 180° zueinander versetzten Ausrichtungen in den Halter einsetzbar sein, wobei der Unterabschnitt zwei senkrecht zu einer Erstreckungsebene des Schlossbügels in der Zollstocckonfiguration versetzte Eingriffsnuten oder Eingriffserhebungen aufweisen kann, wobei in Abhängigkeit von der Ausrichtung des eingesetzten Schlossbügels eine erste der zwei Eingriffsnuten oder Eingriffserhebungen oder eine zweite der zwei Eingriffsnuten oder Eingriffserhebungen mit dem Klemmabschnitt zusammenwirken kann.

Insbesondere kann der Schlossbügel somit in beliebigen Ausrichtungen in den Halter einsetzbar sein, wobei der Schlossbügel in jeder der Ausrichtungen korrekt durch den Klemmabschnitt und beispielsweise einen Eingriff einer Eingriffserhebung des Klemmabschnitts in eine von an dem Unterabschnitt ausgebildeten Eingriffsnuten (oder umgekehrt) gesichert werden kann.

Der Halter kann bei einigen Ausführungsformen einen schwenkbaren Haltebügel zum Übergreifen des eingesetzten Schlossbügels, insbesondere dessen Gelenkstabbügels, an einer Vorderseite aufweisen. Insbesondere kann der schwenkbare Haltebügel dazu ausgebildet sein, die Gelenkstäbe des in der Zollstockkonfiguration angeordneten Gelenkstabbügels zu übergreifen, wenn der Schlossbügel in den Halter eingesetzt ist, um den Schlossbügel hierdurch gegen ein Lösen aus dem Halter zu sichern. Der Schwenkbügel kann um eine parallel zu den Längsachsen der Gelenkstäbe des in den Halter eingesetzten Gelenkstabbügels schwenkbar sein.

Die Erfindung betrifft ferner ein Schließsystem, welches einen Schlossbügel gemäß der vorliegenden Offenbarung sowie ein Schloss zum Verriegeln des Verriegelungsabschnitts umfasst.

Das Schloss kann insbesondere als ein an dem zu sichernden Zweirad befestigtes Rahmenschloss mit einer Einführöffnung zum Einführen des Verriegelungsabschnitts oder als ein Hangschloss mit einer Einführöffnung zum Einführen des Verriegelungsabschnitts ausgebildet sein.

Darüber hinaus kann das Schließsystem bei einigen Ausführungsformen einen Halter umfassen, in welchen der Schlossbügel bei in der Zollstockkonfiguration befindlichem Gelenkstabbügel einsetzbar ist, wie dies vorstehend bereits erläutert wurde.

Insbesondere bei einer Befestigung des Verriegelungsabschnitts an einem an dem Zweirad befestigten Rahmenschloss kann somit ein in sich geschlossenes Schließsystem geschaffen werden, welche eine komfortable Möglichkeit zum Transport des Schlossbügels, insbesondere in einem an dem Zweirad befestigten Halter, sowie ein ebenfalls an dem Zweirad befestigtes Schloss, das Rahmenschloss, aufweist, an welchem der Verriegelungsabschnitt nach dem Bilden der geschlossenen Schlaufe verriegelbar ist. Hierdurch kann etwa ein ortsfester Gegenstand wie ein Fahrradständer in einem Innenraum der von dem Schlossbügel gebildeten Schlaufe angeordnet werden, um den Verriegelungsabschnitt, insbesondere einen Kloben, sodann an dem Rahmenschloss zu verriegeln und aufgrund dessen Befestigung an dem Zweirad unmittelbar das Zweirad an dem ortsfesten Gegenstand zu sichern. Zudem kann durch einen weiteren Verriegelungsmechanismus des Rahmenschlosses in herkömmlicher Weise ein Bügel des Rahmenschlosses einen Zwischenraum zwischen zwei Speichen eines Laufrads des Zweirads durchgreifend verriegelt werden, um das Zweirad auch hierdurch gegen ein unerlaubtes Wegfahren zu sichern.

Die Erfindung betrifft daher auch ein System, welches ein Fahrrad mit einem daran befestigten Rahmenschloss und einen Schlossbügel der hierin offenbarten Art umfasst, dessen Verriegelungsabschnitt an dem Rahmenschloss verriegelbar ist. Zudem kann das System bei einigen Ausführungsformen einen Halter aufweisen, welcher an dem Zweirad befestigbar oder befestigt ist und in welchen der Schlossbügel bei in der Zollstockkonfiguration befindlichem Gelenkstabbügel einsetzbar ist, wie dies vorstehend erläutert wurde. Der Verriegelungsabschnitt kann insbesondere als Kloben ausgebildet sein und das Rahmenschloss kann eine Klobeneinführöffnung zum Verriegeln des Klobens aufweisen.

Die Erfindung wird im Folgenden rein beispielhaft anhand einer Ausführungsform unter Bezugnahme auf die Zeichnungen erläutert.

### Es zeigen:

- Fig. 1: eine perspektivische Ansicht eines flexiblen Schlossbügels, welcher einen Gelenkstabbügel aufweist, an dessen erstem Ende ein Ösenabschnitt und an dessen zweitem Ende ein Verriegelungsabschnitt angeordnet ist, wobei der Gelenkstabbügel in eine Zollstockkonfiguration gebracht ist,
- Fig. 2: eine weitere Ansicht des Schlossbügels, wobei ein den Ösenabschnitt umgebendes Gehäuse entfernt ist,
- Fig. 3: eine perspektivische Ansicht eines Halters, welcher an einem Zweirad befestigbar ist und in welchem der Schlossbügel bei in der Zollstockkonfiguration angeordnetem Gelenkstabbügel einsetzbar ist, und
- Fig. 4: eine perspektivische Ansicht des in den Halter eingesetzten Schlossbügels.

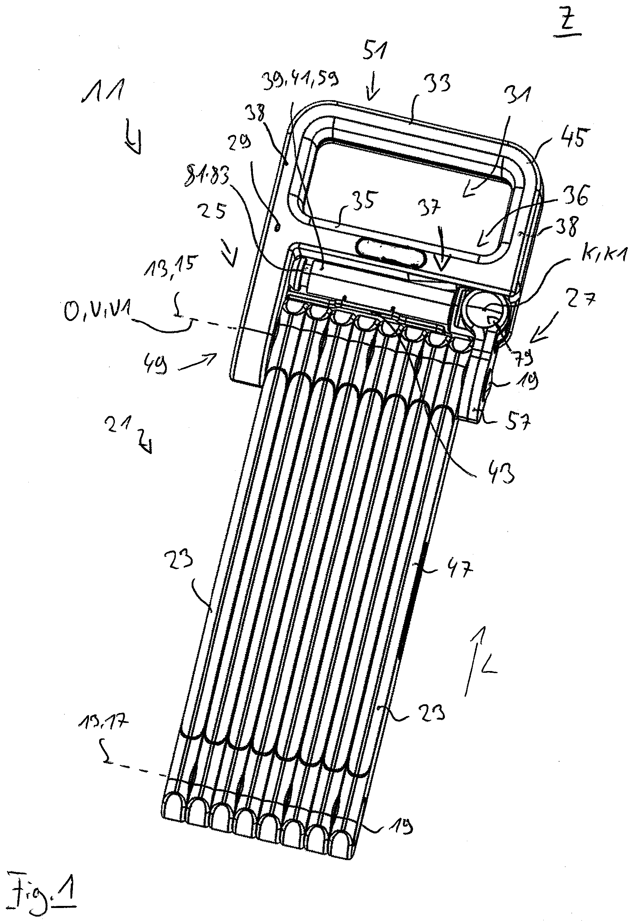

Fig. 1 zeigt eine perspektivische Darstellung eines Schlossbügels 11, welcher einen durch mehrere Gelenkstäbe 23 gebildeten Gelenkstabbügel 21 umfasst. Der Gelenkstabbügel 21 erstreckt sich von einem ersten Ende 25 zu einem zweiten Ende 27, wobei benachbarte Gelenkstäbe 23 des Gelenkstabbügels 21 um jeweilige Gelenkachsen 13 schwenkbar miteinander verbunden sind. Zudem sind die Gelenkstäbe 23 flach und/oder als flache Stäbe mit einer im Wesentlichen rechteckigen Querschnittsform ausgebildet. Die Gelenkachsen 13 werden von jeweiligen Nieten 19 gebildet, welche die Gelenkstäbe 23 zugleich aneinander befestigen.

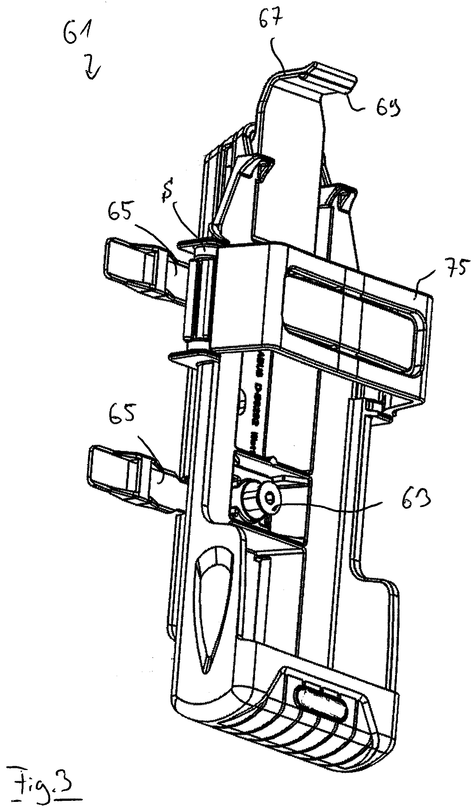

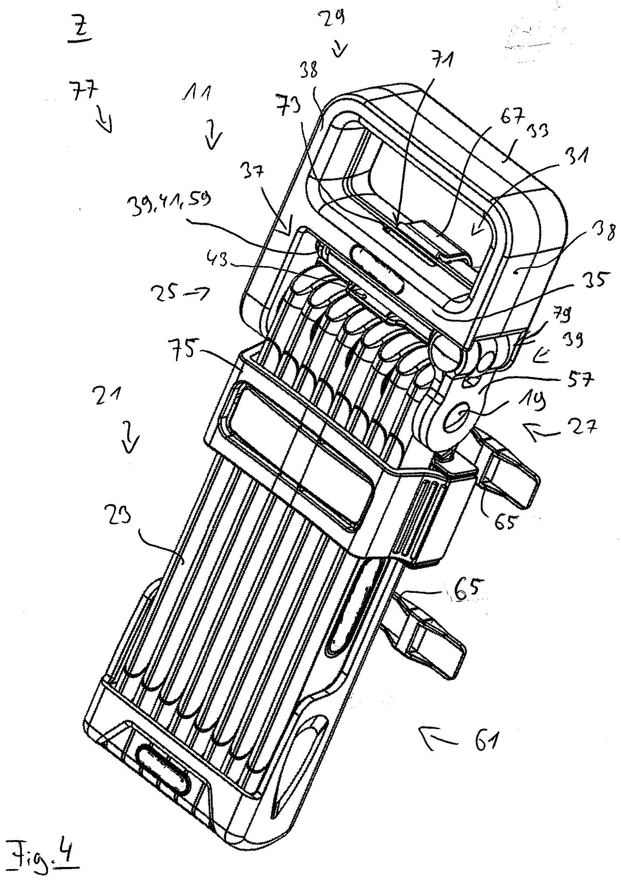

In Fig. 1 ist der Gelenkstabbügel 21 in einer Zollstockkonfiguration Z gezeigt, in welcher die Gelenkstäbe 23 und deren Längsachsen L parallel zueinander angeordnet sind und die Gelenkachsen 13 in einer oberen Gelenkachse 15 und einer unteren Gelenkachse 17 zusammenfallen. Aufgrund der parallelen Anordnung der Gelenkstäbe 23 in der Zollstockkonfiguration Z ist der Gelenkstabbügel 21 somit in eine kompakte und geordnete Anordnung überführt, in welcher sich der Gelenkstabbügel 21 und der Schlossbügel 11 insgesamt im Wesentlichen in einer durch die Gelenkstäbe 23 aufgespannten Erstreckungsebene erstrecken. Daher kann der Schlossbügel 11 bei in der Zollstockkonfiguration Z angeordnetem Gelenkstabbügel 21 komfortabel verstaut und transportiert werden, wobei insbesondere auch ein Transport in einem Halter 61 möglich ist, wie nachstehend anhand der Figuren 3 und 4 noch näher erläutert ist.

Eine solche Möglichkeit zum komfortablen Transportieren des Schlossbügels 11 kann insbesondere daher von Nutzen sein, als der Schlossbügel 11 insbesondere zum Sichern eines Zweirads gegen ein unbefugtes Entfernen oder Wegfahren vorgesehen sein und daher häufig zwischen verschiedenen Einsatzorten transportiert werden kann. Um ein solches Sichern eines Zweirads zu ermöglichen, ist an dem ersten Ende 25 des Gelenkstabbügels 21 ein Ösenabschnitt 29 vorgesehen, welcher um eine Ösenabschnitt-Gelenkachse O schwenkbar an dem ersten Ende 25 des Gelenkstabbügels 21 befestigt ist und einen Anschlussabschnitt 49 aufweist. In dem Zollstockkonfiguration Z erstreckt sich der Anschlussabschnitt 49 entlang der Längsachse L des Gelenkstabbügels 23, welcher das erste Ende 25 des Gelenkstabbügels 21 bildet. Ferner weist der Ösenabschnitt 29 einen geschlossenen Durchsteckabschnitt 51 auf, welcher insbesondere durch einen Oberabschnitt 33 und einen Unterabschnitt 35 sowie zwei seitliche Begrenzungen 38 begrenzt ist und eine Durchstecköffnung 31 bildet. Insbesondere ist der Ösenabschnitt 29 daher P-förmig ausgebildet, wie in den Fig. 1, 2 und 3 deutlich zu erkennen ist.

An dem dem ersten Ende 25 entgegengesetzten zweiten Ende 27 des Gelenkstabbügels 21 ist ferner über einen Niet 19 ein Verriegelungsabschnitt 27 befestigt. Der Verriegelungsabschnitt 27 weist ein Verbindungselement 57 auf, welches durch den Niet 19 um eine Verriegelungsabschnitt-Gelenkachse V, die mit einer Verbindungselement-Gelenkachse V1 zusammenfällt, schwenkbar an dem das zweite Ende 27 bildenden Gelenkstab 23 befestigt ist. Darüber hinaus weist der Verriegelungsabschnitt 39 ein als Kloben 41 ausgebildetes Verriegelungselement 59 auf, welches um eine Verriegelungsabschnitt-Kippachse K, die mit einer Verriegelungselement-Kippachse K1 zusammenfällt und senkrecht zu den Gelenkachsen 13 ausgerichtet ist, schwenkbar an dem Verbindungselement 27 befestigt ist. Der Kloben 41 ist stiftförmig ausgebildet und weist eine als Ringnut 83 ausgebildete Verriegelungsvertiefung 81 auf, um durch ein Riegelelement eines zugeordneten Schlosses verriegelt werden zu können.

Das Verbindungselement 57 ist im Bereich des Anschlusses an das zweite Ende 27 des Gelenkstabbügels 21 zweilagig ausgebildet, wobei beide Lagen durch den Niet 19 mit dem das zweite Ende 27 bildenden Gelenkstab 23 verbunden sind, um die Verschwenkbarkeit des Verbindungselements 57 um die Verriegelungsabschnitt-Gelenkachse V und zudem eine zuverlässige Befestigung des Verbindungselements 57 an dem zweiten Ende 27 des Gelenkstabs 23 zu erreichen. Zudem bildet das Verbindungselement 57 zwei (senkrecht zu der Zeichenebene beabstandete) Lagerungsöffnungen 79 aus, in welchen das Verriegelungselement 59 um die Verriegelungselement-Kippachse K1 schwenkbar gehalten ist.

Der Verriegelungsabschnitt 39 oder der Kloben 41 ist in der Zollstockkonfiguration Z ferner senkrecht zu den Längsachsen L der Gelenkstäbe 23 ausgerichtet und in einem Zwischenraum 37 zwischen dem Unterabschnitt 35 des Ösenabschnitts 29 und dem Gelenkstabbügel 21 angeordnet. Der Ösenabschnitt 29 weist zudem ein Kunststoffgehäuse 45 auf, an welchem eine Klemmstruktur 43 ausgebildet ist, in welche der Kloben 41 eingeklemmt ist, um in der Zollstockkonfiguration Z sicher in dem Zwischenraum 37 verwahrt werden zu können (vgl. auch Fig. 4). Insbesondere kann hierzu der Kloben 41 zunächst um die Verriegelungselement-Kippachse K1 senkrecht zu dem das zweite Ende 27 bildenden Gelenkstab 43 ausgerichtet werden, woraufhin der das zweite Ende 27 bildende Gelenkstab 23 in die für die Zollstockkonfiguration Z vorgesehene Ausrichtung überführt werden kann, um den Kloben 41 in Kontakt zu der Klemmstruktur 43 bringen zu können.

Zusätzlich zu der Klemmstruktur 43, die insbesondere elastisch rückfedernd ausgebildet sein kann, ermöglicht das Kunststoffgehäuse 45 auch, etwaige Beschädigungen eines Zweirads durch einen Kontakt mit dem Ösenabschnitt 29 oder eine Geräuschbildung aufgrund eines Klapperns während einer Fahrt mit dem Zweirad verhindern zu können. Zu diesem Zweck sind auch die Gelenkstäbe 23 durch eine Ummantelung 47 umschlossen, die ebenfalls aus Kunststoff oder aus Gummi ausgebildet und/oder elastisch sein kann, um eine Geräuschbildung oder ein Verkratzen eines Rahmenabschnitts bei einer Benutzung oder während eines Transports des Schlossbügels 11 verhindern zu können. In der Ummantelung eingeschlossen können hingegen insbesondere metallische und/oder aus Stahl gebildete Stababschnitte angeordnet sein, um eine hinreichende Sicherheit gegenüber gewaltsamen Aufbruchsversuchen erreichen zu können.

Während die Fig. 1, 2 und 4 den Schlossbügel 11 oder dessen Gelenkstabbügel 21 in der Zollstockkonfiguration Z zeigen, kann der Gelenkstabbügel 21, wie dem Fachmann grundsätzlich geläufig ist, durch Verschwenken der Gelenkstäbe 23 relativ zueinander in eine Gebrauchskonfiguration überführt werden. In dieser Gebrauchskonfiguration kann der Verriegelungsabschnitt 39, insbesondere bei entlang der Längsachse L des das zweite Ende 27 bildenden Gelenkstabs 23 ausgerichtetem Kloben 41, durch die Durchstecköffnung 31 hindurchgeführt werden, so dass durch den Schlossbügel 11 eine geschlossene Schlaufe gebildet werden kann. Der Kloben 41 kann sodann an einem zugeordneten Schloss, welches in den Figuren nicht gezeigt ist, verriegelt werden, um einen von dem Schlossbügel 11 eingeschlossenen Gegenstand gegen ein Entfernen von dem Schloss sichern zu können.

Beispielsweise kann dahingehend vorgesehen sein, den Kloben 41 in eine Einführöffnung eines fest an einem Zweirad angeordneten Rahmenschlosses einzuführen und dort zu verriegeln, wenn in einem Innenraum der durch den Schlossbügel 11 gebildeten Schlaufe ein ortsfester Gegenstand und beispielsweise ein Fahrradständer eingeschlossen ist, um das Zweirad sicher mit dem Gegenstand zu verbinden und gegen ein unbefugtes Entnehmen zu sichern. Darüber hinaus kann grundsätzlich auch vorgesehen sein, den Schlossbügel 11 derart anzuordnen, dass ein Rahmenabschnitt sowie ein Abschnitt eines Laufrads eines Zweirads in einem Innenraum der gebildeten Schlaufe angeordnet sind, wobei der Kloben 41 oder der Verriegelungsabschnitt 39 daraufhin beispielsweise in eine Einführöffnung eines Hangschlosses eingeführt werden kann, welches nicht durch die Durchstecköffnung 31 hindurchführbar ist, um das Zweirad auf diese Weise gegen ein unbefugtes Wegfahren zu sichern. Insofern ermöglicht der angesichts der Schwenkbarkeit der Gelenkstäbe 23 relativ zueinander flexibel ausgebildete Schlossbügel 11 ein komfortables Sichern eines Zweirads gegen ein Wegfahren, wobei die Möglichkeit, den Gelenkstabbügel 21 in die Zollstockkonfiguration Z zu überführen, zudem ein komfortables, kompaktes und aufgeräumtes Transportieren des Schlossbügels 11 ermöglicht.

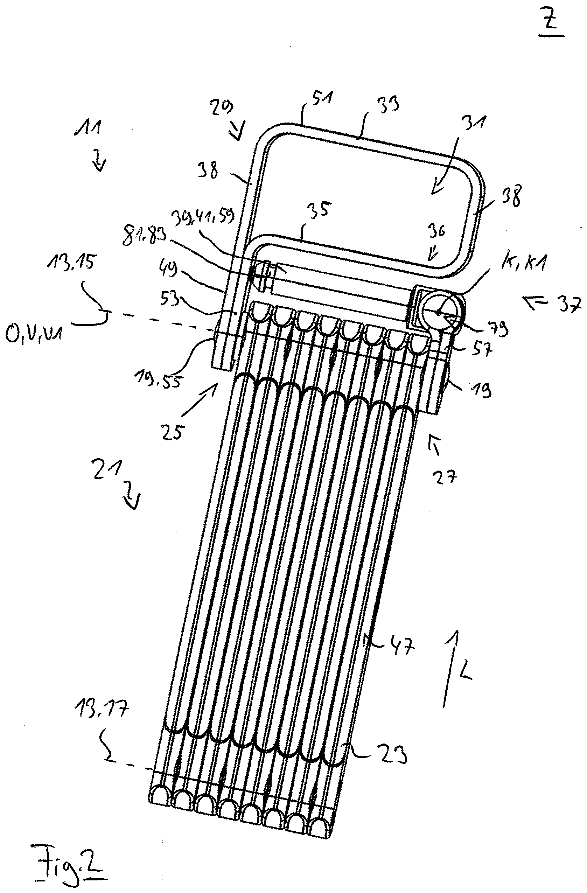

Fig. 2 veranschaulicht den Schlossbügel 11 nochmals bei entnommenem Kunststoffgehäuse 45 des Ösenabschnitts 29, wobei ersichtlich wird, dass der Ösenabschnitt 29 letztlich durch ein gebogenes Blech oder Metallelement gebildet sein kann. Der Ösenabschnitt 29 ist zudem an dem bereits erwähnten Anschlussabschnitt 49 zweilagig ausgebildet, indem sich ein Überlappungsabschnitt 53 an den Durchsteckabschnitt 51 anschließt und entlang des Anschlussabschnitts 49 erstreckt. Der Anschlussabschnitt 49 und der Überlappungsabschnitt 53 sind durch ein gemeinsames Befestigungselement 55, welches ebenfalls als ein Niet 19 ausgebildet ist, mit dem das erste Ende 25 bildenden Gelenkstab 23 verbunden, so dass der Ösenabschnitt 29 um eine Ösenabschnitt-Schwenkachse O schwenkbar an dem Gelenkstab 23 angelenkt ist. Zudem wird aus Fig. 2 nochmals der zwischen dem Unterabschnitt 35 und dem Gelenkstabbügel 21 in der Zollstockkonfiguration Z verfügbare Zwischenraum 37 ersichtlich, in welchem der Verriegelungsabschnitt 39 angeordnet ist.

Wie bereits erwähnt, kann der Schlossbügel 11 bei in der Zollstockkonfiguration Z angeordnetem Gelenkstabbügel 21 insbesondere in einen Halter eingesetzt werden, wobei ein solcher Halter 61 beispielhaft in Fig. 3 veranschaulicht ist. Der Halter 61 kann über Schrauben 63, von welcher in Fig. 3 lediglich eine sichtbar ist, an einem Rahmenabschnitt eines zugeordneten Zweirads verschraubt werden. Darüber hinaus sind an dem Halter 61 Bänder 65 angeordnet, welche etwa um ein Rohr eines Zweiradrahmens gewunden werden können, um den Halter 61 dadurch weiter zu stabilisieren.

Wie insbesondere aus der Zusammenschau mit Fig. 4 ersichtlich wird, welche den in den Halter 61 eingesetzten Schlossbügel 11 und damit ein den Schlossbügel 11 und den Halter 61 umfassendes Schließsystem 77 zeigt, ist der Schlossbügel 11 insbesondere derart in den Halter 61 einsetzbar, dass der Gelenkstabbügel 21 von einem um eine Schwenkachse S schwenkbaren Haltebügel 75 des Halters 61 an der Vorderseite übergriffen wird.

Darüber hinaus weist der Halter 61 einen Klemmabschnitt 67 auf, welcher eine Eingriffserhebung 69 umfasst und sich hakenartig entlang des Unterabschnitts 35 des Ösenabschnitts 29 erstreckt (vgl. auch Fig. 3). Fig. 4 zeigt, dass der Klemmabschnitt 67 den Unterabschnitt 35 des Ösenabschnitts 29 an einer dem Oberabschnitt 33 zugewandten Oberseite 36 übergreift und mit der Eingriffserhebung 69 in eine an der Oberseite 36 angeordnete Eingriffsnut 71 eingreift, um den Schlossbügel 11 hierdurch zusätzlich in dem Halter 61 zu sichern. Insbesondere wird der Schlossbügel 11 somit durch den Klemmabschnitt 67 in Richtung des Gelenkstabbügels 21 in den Halter 61 eingedrückt und gegen ein Verschwenken in Richtung der (in den Figuren ersichtlichen und von dem Haltebügel 67 übergriffenen) Vorderseite gesichert.

Ferner zeigt Fig. 4, dass an der Oberseite 36 des Unterabschnitts 35 des Ösenabschnitts 29 eine weitere Eingriffsnut 73 ausgebildet ist. Dies ermöglicht es, den Schlossbügel 11 wahlweise in zueinander um 180° versetzten Ausrichtungen in den Halter 61 einzusetzen, wobei die Eingriffserhebung 69 des Klemmabschnitts 67 stets mit einer jeweiligen der Eingriffsnuten 71 oder 73 in Eingriff geraten kann, um eine zuverlässige Sicherung des Schlossbügels 11 in dem Halter 61 erreichen zu können.

### Bezugszeichenliste

- 11: Schlossbügel
- 13: Gelenkachse
- 15: obere Gelenkachse
- 17: untere Gelenkachse
- 19: Niet
- 21: Gelenkstabbügel
- 23: Gelenkstab
- 25: erstes Ende
- 27: zweites Ende
- 29: Ösenabschnitt
- 31: Durchstecköffnung
- 33: Oberabschnitt
- 35: Unterabschnitt
- 36: Oberseite
- 37: Zwischenraum
- 38: seitliche Begrenzung
- 39: Verriegelungsabschnitt
- 41: Kloben
- 43: Klemmstruktur
- 45: Kunststoffgehäuse
- 47: Ummantelung
- 49: Anschlussabschnitt
- 51: Durchsteckabschnitt
- 53: Überlappungsabschnitt
- 55: Befestigungselement
- 57: Verbindungselement
- 59: Verriegelungselement
- 61: Halter
- 63: Schraube
- 65: Band
- 67: Klemmabschnitt
- 69: Eingriffserhebung
- 71: Eingriffsnut
- 73: Eingriffsnut
- 75: Haltebügel
- 77: Schließsystem
- 79: Lagerungsöffnung
- 81: Verriegelungsvertiefung
- 83: Ringnut
- K: Verriegelungsabschnitt-Kippachse
- K1: Verriegelungselement-Kippachse
- L: Längsachse
- O: Ösenabschnitt-Gelenkachse
- S: Schwenkachse
- V: Verriegelungsabschnitt-Gelenkachse
- V1: Verbindungselement-Gelenkachse
- Z: Zollstockkonfiguration

## Patentansprüche

1. Flexibler Schlossbügel (11) zum Sichern eines Zweirads,
welcher mehrere miteinander verbundene und relativ zueinander um jeweilige Gelenkachsen (13) schwenkbare Gelenkstäbe (23) aufweist, die einen sich von einem ersten Ende (25) zu einem zweiten Ende (27) erstreckenden Gelenkstabbügel (21) bilden,
wobei an dem ersten Ende (25) des Gelenkstabbügels (21) ein Ösenabschnitt (29) angeordnet ist und wobei an dem zweiten Ende (27) des Gelenkstabbügels (21) ein Verriegelungsabschnitt (39) angeordnet ist,
wobei der Ösenabschnitt (29) eine Durchstecköffnung (31) bildet, durch welche der Verriegelungsabschnitt (39) in einer Gebrauchskonfiguration des Gelenkstabbügels (21), in welcher die Gelenkstäbe (23) relativ zueinander verschwenkt sind, zum Bilden einer geschlossenen Schlaufe hindurchsteckbar ist, und
wobei der Gelenkstabbügel (21) in eine Zollstockkonfiguration (Z) zusammenfaltbar ist, in welcher die Gelenkstäbe (23) parallel zueinander ausgerichtet sind.

2. Flexibler Schlossbügel (11) nach Anspruch 1,
wobei die Gelenkachsen (13) in der Zollstockkonfiguration (Z) in einer oberen Gelenkachse (15) und einer unteren Gelenkachse (17) zusammenfallen; und/oder
wobei sämtliche Gelenkachsen (13) parallel zueinander ausgerichtet sind; und/oder
wobei die Gelenkstäbe eine Ummantelung (47) aufweisen, wobei die Ummantelung (47) insbesondere aus Kunststoff oder Gummi gefertigt und/oder elastisch ist.

3. Flexibler Schlossbügel (11) nach Anspruch 1 oder 2,
wobei sich die Gelenkstäbe (23) entlang einer jeweiligen Längsachse (L) erstrecken, wobei die Längsachsen (L) der Gelenkstäbe (23) in der Zollstocckonfiguration (Z) parallel zueinander ausgerichtet sind, wobei der Verriegelungsabschnitt (39) in der Zollstockkonfiguration (Z) senkrecht zu den Längsachsen (L) ausrichtbar und in einem Zwischenraum (37) zwischen den Gelenkstäben (23) und der Durchstecköffnung (31) positionierbar ist, wobei der Ösenabschnitt (29) insbesondere eine Klemmstruktur (43) aufweist, in welche der Verriegelungsabschnitt (39) in der Zollstockkonfiguration (Z) einklemmbar ist.

4. Flexibler Schlossbügel (11) nach einem der vorhergehenden Ansprüche,
wobei der Ösenabschnitt (29) ein Kunststoffgehäuse (45) aufweist; und/oder
wobei der Verriegelungsabschnitt (39) einen an einem zugeordneten Schloss verriegelbaren Kloben (41) oder eine Öse aufweist.

5. Flexibler Schlossbügel (11) nach einem der vorhergehenden Ansprüche, wobei der Ösenabschnitt (29) schwenkbar an dem ersten Ende (25) angeordnet ist, insbesondere um eine parallel zu den Gelenkachsen (13) ausgerichtete Ösenabschnitt-Gelenkachse (O).

6. Flexibler Schlossbügel (11) nach einem der vorhergehenden Ansprüche, wobei der Ösenabschnitt (29) einen sich von dem ersten Ende (25) weg erstreckenden Anschlussabschnitt (49) und einen Durchsteckabschnitt (51) aufweist, welcher die Durchstecköffnung (31) bildet; und/oder wobei der Ösenabschnitt (29) P-förmig ausgebildet ist.

7. Flexibler Schlossbügel (11) nach Anspruch 6,
wobei der Durchsteckabschnitt (51) in einen sich entlang des Anschlussabschnitts (49) erstreckenden Überlappungsabschnitt (53) übergeht, wobei der Anschlussabschnitts (49) und der Überlappungsabschnitt (53) insbesondere durch ein gemeinsames Befestigungselement (55), weiter insbesondere durch einen Niet (19), an dem ersten Ende (25) des Gelenkstabbügels (21) befestigt sind.

8. Flexibler Schlossbügel (11) nach einem der vorhergehenden Ansprüche, wobei der Verriegelungsabschnitt (39) schwenkbar an dem zweiten Ende (27) angeordnet ist.

9. Flexibler Schlossbügel (11) nach Anspruch 8,
wobei der Verriegelungsabschnitt (39) um eine parallel zu den Gelenkachsen (13) ausgerichteten Verriegelungsabschnitt-Gelenkachse (V) schwenkbar ist und/oder wobei der Verriegelungsabschnitt (39) um eine senkrecht zu den Gelenkachsen (13) ausgerichtete Verriegelungsabschnitt-Kippachse (K) schwenkbar ist.

10. Flexibler Schlossbügel (11) nach einem der vorhergehenden Ansprüche, wobei der Verriegelungsabschnitt (39) ein Verbindungselement (57) und ein Verriegelungselement (59) aufweist, wobei das Verbindungselement (57) um eine parallel zu den Gelenkachsen (13) ausgerichteten Verbindungselement-Gelenkachse (V1) schwenkbar an dem zweiten Ende (27) des Gelenkstabbügels (21) befestigt ist und wobei das Verriegelungselement (59) um eine senkrecht zu der Verbindungselement-Gelenkachse (V1) ausgerichtete Verriegelungselement-Kippachse (K1) schwenkbar an dem Verbindungselement (57) befestigt ist.

11. Schließsystem (77) umfassend einen Schlossbügel (11) nach einem der vorhergehenden Ansprüche und einen Halter (61), in welchen der Schlossbügel (11) bei in der Zollstockkonfiguration (Z) angeordnetem Gelenkstabbügel (21) einsetzbar ist,
wobei der Halter (61) insbesondere einen schwenkbaren Haltebügel (75) zum Übergreifen des eingesetzten Schlossbügels (11) an einer Vorderseite aufweist.

12. Schließsystem (77) nach Anspruch 11,
wobei der Halter (61) an dem Zweirad befestigbar ist.

13. Schließsystem (77) nach Anspruch 11 oder 12,
wobei die Durchstecköffnung (31) durch einen dem Gelenkstabbügel (21) in der Zollstockkonfiguration (Z) abgewandten Oberabschnitt (33) und einen dem Gelenkstabbügel (21) in der Zollstockkonfiguration (Z) zugewandten Unterabschnitt (35) begrenzt ist, wobei der Halter (61) einen Klemmabschnitt (67) aufweist, welcher sich bei eingesetztem Schlossbügel (11) entlang einer dem Oberabschnitt (33) zugewandten Oberseite (36) des Unterabschnitts (35) erstreckt und den Schlossbügel (11) in dem Halter (61) sichert,
insbesondere wobei der Klemmabschnitt (67) eine Eingriffserhebung (69) und der Unterabschnitt (35) eine Eingriffsnut (71, 73) aufweist, oder umgekehrt, wobei die Eingriffserhebung (69) bei in den Halter (61) eingesetztem Schlossbügel (11) in die Eingriffsnut (71, 73) eingreift.

14. Schließsystem (77) nach Anspruch 13,
wobei der Schlossbügel (11) in um 180 Grad zueinander versetzten Ausrichtungen in den Halter (61) einsetzbar ist, wobei der Unterabschnitt (35) zwei senkrecht zu einer Erstreckungsebene des Schlossbügels (11) in der Zollstockkonfiguration (Z) versetzte Eingriffsnuten (71, 73) oder Eingriffserhebungen aufweist, wobei in Abhängigkeit von der Ausrichtung des eingesetzten Schlossbügels (11) eine erste der zwei Eingriffsnuten (71) oder Eingriffserhebungen oder eine zweite der zwei Eingriffsnuten (73) oder Eingriffserhebungen mit dem Klemmabschnitt (67) zusammenwirkt.

15. Schließsystem umfassend einen Schlossbügel (11) nach einem der Ansprüche 1 bis 10, insbesondere Schließsystem (77) nach einem der Ansprüche 11 bis 14,
ferner umfassend ein Schloss zum Verriegeln des Verriegelungsabschnitts (39), insbesondere ein an dem Zweirad befestigtes Rahmenschloss mit einer Einführöffnung zum Einführen des Verriegelungsabschnitts (39) oder ein Hangschloss mit einer Einführöffnung zum Einführen des Verriegelungsabschnitts (39).
